# FASCICULE DE BREVET EUROPEEN

(11) **EP 2 966 940 B1**
(45) Date de publication et mention de la délivrance du brevet: **25.04.2018**
(21) Numéro de dépôt: 15175150.0
(22) Date de dépôt: 02.07.2015
(51) Int. Cl.: H05B 33/08, H05B 37/02, B60Q 3/00

(54) **SYSTÈME DE PILOTAGE DE L'ALIMENTATION ÉLECTRIQUE D'UNE PLURALITÉ DE SOURCES LUMINEUSES UTILISANT UN CONVERTISSEUR MULTIPHASE**
SYSTEM ZUR STEUERUNG DER STROMVERSORGUNG EINER VIELZAHL VON LEUCHTQUELLEN MITHILFE EINES MULTIPHASENWANDLERS
SYSTEM FOR CONTROLLING THE POWER SUPPLY OF A PLURALITY OF LIGHT SOURCES USING A MULTIPHASE CONVERTER

(30) Priorité: 07.07.2014 FR 1456516
(43) Date de publication de la demande: 13.01.2016
(73) Titulaire: VALEO VISION, 93012 Bobigny Cedex (FR)
(72) Inventeur: KRICK, Sébastian, 75019 PARIS (FR); WACHEUX, Patrick, 27220 Bois Le Roy (FR); NGUYEN, Huy-Cuong, 94350 VILLIERS SUR MARNE (FR); DUARTE, Marc, 93250 VILLEMOMBLE (FR); BODZIANY, Dominique, 93250 VILLEMOMBLE (FR); LESAFFRE, Olivier-Sébastien, 93500 PANTIN (FR)

(56) Documents cités:
- WO-A1-2013/014580
- US-A1- 2005 213 353
- US-A1- 2006 001 381
- US-A1- 2012 181 931
- US-A1- 2012 229 114
- US-A1- 2012 319 604

## Description

L'invention a trait au domaine de l'alimentation électrique de sources lumineuses, plus précisément de diodes électroluminescentes, LED. En particulier, l'invention se rapporte à un système et procédé de pilotage de l'alimentation électrique d'une pluralité de sources lumineuses, regroupées dans plusieurs groupes. Chaque groupe est alimenté par une mise en série d'un convertisseur élévateur de tension, par exemple de type boost, et d'un convertisseur abaisseur de tension, par exemple de type buck, les convertisseurs élévateurs de tous les groupes opérant comme un convertisseur élévateur de tension multiphase. L'invention concerne également un système d'éclairage pour un véhicule automobile
Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. Dans le domaine automobile, on a recours de plus en plus à la technologie LED pour diverses solutions de signalisation lumineuse. Un circuit de pilotage est utilisé pour piloter un ensemble ou groupe de LEDs en courant. Le circuit définit le courant qui traverse une branche montée en charge et comprenant le groupe de LEDs branchées en série. Le document US 2006/001381 A1 divulgue un circuit de pilotage de l'alimentation électrique d'une pluralité de sources lumineuses. Il est connu d'utiliser des circuits de pilotage distincts alimentant des groupes de LEDs distincts, chaque groupe remplissant une fonction d'éclairage distincte d'un véhicule automobile. De telles fonctions comprennent entre autres les feux de route, les feux de croisements ou l'éclairage sur les côtés. Il est connu d'alimenter chaque fonction de façon indépendante des autres fonctions par un circuit de pilotage dédié.
Un circuit de pilotage dédié comprend par exemple un convertisseur élévateur (boost) suivi en série d'un convertisseur abaisseur (buck). Dans un tel cas, la mesure du courant d'entrée d'un circuit de pilotage dédié donne à chaque instant une indication relative à la puissance de sortie requise par la fonction en question. Cette indication est par exemple utilisée par des moyens de diagnostic du fonctionnement des fonctions lumineuses du véhicule automobile.

Il devient de plus en plus courant d'utiliser un convertisseur élévateur de tension multiphase commun à chacune des fonctions lumineuses, suivi en série de convertisseurs buck dédiés par fonction. Un convertisseur multiphase est obtenu en reliant en sortie plusieurs convertisseurs élévateurs de tension ayant une commande commune. Les convertisseurs élévateurs individuels faisant office de phases du convertisseur multiphase contribuent de façon jointe à l'obtention d'une tension de sortie commune. Le courant consommé par chacune des fonctions lumineuses est dans ce cas fourni par un circuit de pilotage commun. La mesure du courant d'entrée de chacune des phases du convertisseur élévateur multiphase n'est plus nécessairement représentative de la puissance de sortie requise par chacune des fonctions. Un système de diagnostic utilisant l'indication fournie par les courants d'entrée afin de déduire l'état de fonctionnement des fonctions lumineuses respectives n'est donc plus capable de fournir des indications de diagnostic fiables. En effet, la détection de faux positifs et/ou de faux négatifs peut être la conséquence de l'utilisation de l'intensité du courant d'entrée de chaque convertisseur élévateur individuel, qui est désormais une grandeur mal conditionnée.

L'invention a pour objectif de proposer un système de pilotage de l'alimentation électrique d'une pluralité de sources lumineuses palliant au moins un des inconvénients de l'art antérieur. L'invention à également pour objectif de proposer un procédé de pilotage de l'alimentation électrique d'une pluralité de sources lumineuses ainsi qu'un système d'éclairage pour un véhicule automobile utilisant le système de pilotage selon l'invention.

L'invention a pour objet un dispositif de pilotage de l'alimentation électrique d'une pluralité de sources lumineuses, la pluralité de sources lumineuses étant divisée en au moins deux groupes de sources lumineuses, chaque groupe ayant des besoins de courant spécifiques. Le dispositif comprend pour chaque groupe une branche comprenant un convertisseur de type élévateur de tension et un convertisseur de type abaisseur de tension branchés en série et aptes à convertir une tension d'entrée en une tension de charge. Les convertisseurs de type élévateur de chaque branche opèrent comme un convertisseur élévateur multiphase. Le dispositif est remarquable en ce qu'il comprend en outre des moyens de contrôle configurés à adapter le courant d'entrée du convertisseur élévateur de chaque branche en fonction des besoins de courant spécifiques du groupe monté en charge de la branche respective.

Les moyens de contrôle peuvent de préférence adapter le courant d'entrée du convertisseur élévateur de chaque branche en fonction d'une valeur de tension représentative du courant moyen d'entrée du convertisseur élévateur de la branche et en fonction d'une fraction de la valeur moyenne de la tension de sortie V_{BOOST} du convertisseur multiphase. Avantageusement, la valeur de tension représentative du courant moyen d'entrée d'un convertisseur élévateur est une image du courant moyen circulant dans l'inductance du convertisseur, ce courant étant mesuré de façon indirecte par une mesure de tension aux bornes d'une résistance de shunt.

Avantageusement, la moyenne de la tension de sortie V_{BOOST} du convertisseur élévateur multiphase peut être obtenue par un circuit correcteur proportionnel-intégrateur, PI.

Préférentiellement, les moyens de contrôle peuvent comprendre un comparateur pour chaque branche, qui compare la valeur de tension représentative du courant moyen d'entrée du convertisseur élévateur de la branche, à une fraction de la valeur moyenne de la tension de sortie V_{BOOST} du convertisseur élévateur multiphase. Les fractions respectives définissent les besoins de courant spécifiques des groupes montés en charge des branches respectives. Les fractions peuvent avantageusement être obtenues par des circuits diviseurs de tension.

Les moyens de contrôle comprennent avantageusement des moyens d'interruption configurés à interrompre le cycle de fonctionnement en cours d'un convertisseur élévateur, si la valeur de tension y relative, représentative du courant moyen d'entrée du convertisseur, dépasse la fraction de la valeur moyenne de la tension de sortie V_{BOOST} du convertisseur élévateur multiphase à laquelle elle est comparée.

De préférence, les moyens de contrôle peuvent comprendre des moyens de détection aptes à détecter un besoin d'alimentation de chacun des groupes de sources lumineuses. Le signal détecté peut être un message reçu par les moyens de détection sur un moyen de communication de données, tel qu'un bus CAN d'un véhicule automobile.

Les moyens de contrôle peuvent de manière préférentielle comprendre des moyens de commande aptes à commander l'arrêt des convertisseurs élévateurs et abaisseurs d'une branche, suite à la détection d'un défaut du groupe qui y est monté en charge.

Le moyens de contrôle peuvent comprendre des moyens d'horloge reliés aux interrupteurs de chacun des convertisseurs élévateurs et destinés à commander ceux-ci. Les moyens d'horloge sont aptes à émettre un signal d'horloge similaire pour chacun des convertisseurs, le déphasage entre les signaux étant préférentiellement de 360° divisé par le nombre de convertisseurs.

De préférence, les moyens de contrôle sont implémentés par un microcontrôleur unique. Alternativement, plusieurs microcontrôleurs reliés par des moyens de communication, et préférentiellement par un bus de données de type controller area network, CAN, d'un véhicule automobile, peuvent implémenter les fonctions des moyens de contrôle de manière jointe.

Les sources lumineuses sont de préférence des diodes électroluminescentes, LED. Chaque groupe de sources lumineuses comprend de préférence une pluralité de LEDs montées en série.

Le dispositif est de préférence alimenté par une source de courant, préférentiellement une batterie d'un véhicule automobile.

L'invention a également pour objet un système d'éclairage pour un véhicule automobile, comprenant au moins un dispositif de pilotage de l'alimentation électrique de sources lumineuses, la pluralité de sources lumineuses étant divisée en au moins deux groupes de sources lumineuses. Le système d'éclairage est remarquable en ce que ledit dispositif de pilotage de l'alimentation électrique de sources lumineuses est conforme à l'invention.

L'invention a également pour objet un procédé de pilotage de l'alimentation électrique d'une pluralité de sources lumineuses, la pluralité de sources lumineuses étant divisée en au moins deux groupes de sources lumineuses, chaque groupe ayant des besoins de courant spécifiques, et chaque groupe étant branché en charge à une branche comprenant un convertisseur de type élévateur de tension et un convertisseur de type abaisseur de tension, branchés en série et aptes à convertir une tension d'entrée en une tension de charge. Les convertisseurs de type élévateur de chaque branche opèrent comme un convertisseur élévateur multiphase. Le procédé est remarquable en ce qu'il comprend les étapes suivantes :
- mise à disposition d'une valeur moyenne de la tension de sortie V_{BOOST} du convertisseur élévateur multiphase, au niveau de moyens de contrôle;
- mise à disposition des besoins de courant spécifiques du groupe monté en charge de la branche respective, au niveau de moyens de contrôle;
- adaptation, par les moyens de contrôle, du courant d'entrée du convertisseur élévateur de chaque branche en fonction des besoins de courant spécifiques du groupe monté en charge de la branche respective.

Le système et procédé selon l'invention permettent d'utiliser un convertisseur élévateur de tension multiphase dans un circuit de de pilotage commun destiné à l'alimentation électrique d'une pluralité de groupes de sources lumineuses. En même temps, grâce à l'invention, la mesure du courant d'entrée de chacun des convertisseurs élévateurs, i.e., chaque phase du convertisseur multiphase, devient une indication représentative de la puissance de sortie requise par un groupe de sources lumineuses précis. Dans le cas où le dispositif selon l'invention est appliqué à un système d'éclairage d'un véhicule automobile, il présente l'avantage que la mesure du courant d'entrée de chaque phase du convertisseur élévateur multiphase représente une indication fiable du niveau de puissance requis par une fonction lumineuse précise du véhicule à chaque instant. Cette mesure peut être utilisée de manière connue par des systèmes de diagnostic existants d'un véhicule automobile. L'invention rend donc l'utilisation d'un convertisseur multiphase, tel qu'il est souvent utilisé pour piloter des diodes LED, compatible avec des systèmes de diagnostic de véhicules automobiles existants. Sans l'invention, les deux systèmes présentent des incompatibilités inhérentes décrites plus haut.

D'autres caractéristiques et avantages de la présente invention seront mieux compris à l'aide de la description et des dessins, qui ne sont présentés qu'à titre indicatif et non-limitatif de l'invention, et parmi lesquels :
- la figure 1 est une illustration schématique d'un mode de réalisation préférentiel du dispositif selon l'invention ;
- la figure 2 est une illustration schématique d'un mode de réalisation préférentiel d'un détail du dispositif système selon l'invention ;
- la figure 3 est une représentation graphique de l'évolution de signaux de tension mesurés lors du fonctionnement d'un dispositif d'art antérieur ;
- la figure 4 est une représentation graphique de l'évolution de signaux de tension mesurés lors du fonctionnement d'un mode de réalisation préférentiel du dispositif selon l'invention.

Dans ce qui suit, sauf indication contraire, des références similaires seront utilisées pour décrire des concepts et/ou moyens similaires dans des modes de réalisations différents de l'invention. Par exemple, les références 100 et 200 seront utilisées pour décrire trois modes de réalisation du dispositif selon l'invention.

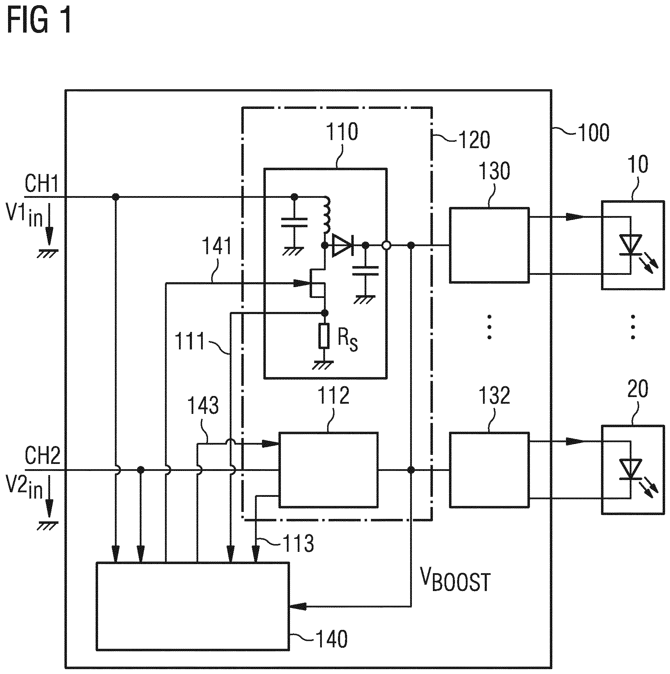

Un mode de réalisation préféré de l'invention est illustré de manière schématique par la Figure 1. Le dispositif 100 permet de piloter l'alimentation électrique d'une pluralité de sources lumineuses, par exemple des diodes électroluminescentes, LED. Un pilotage est nécessaire comme l'intensité lumineuse d'une LED dépend du courant qui la traverse. Dans de multiples applications, et particulièrement dans l'application à un système d'éclairage d'un véhicule automobile, il est important d'assurer une luminosité constante pour chacune des fonctions lumineuses, par exemple les feux diurnes, les indicateurs de virage, etc... Chacune de ces fonctions lumineuses comprend en général un nombre différent de LEDs branchées en série et nécessite un courant et une tension spécifique afin de fournir les performances désirées. Le pilotage de chaque fonction lumineuse, ou de chaque groupe de sources lumineuses indiqués par 10, 20 sur la Figure 1 est donc réalisé par des branches de pilotage qui sont au moins partiellement distinctes. Pour des raisons de clarté de l'exposé, la Figure 1 n'illustre que deux branches CH1, CH2. Il va de soi qu'une pluralité plus importante de branches, chaque branche représentant une fonction lumineuse distincte, est réalisable de manière analogue. Chaque branche peut être alimentée par une même tension d'entrée, ou par des tensions d'entrées distinctes. Chaque groupe de sources lumineuses 10, 20 est illustré par une LED isolée afin de rendre l'illustration plus claire. En réalité, chacun des groupes 10, 20 peut comprendre une pluralité de LEDs branchées en série.
De manière connue, chaque branche comprend un convertisseur élévateur de tension de type boost 110, 112 suivi d'un convertisseur abaisseur de tension de type buck 130, 132. Dans ce qui suit, les convertisseurs élévateurs de tension seront désignés comme convertisseurs boost, tandis que les convertisseurs abaisseurs de tension seront désignés comme convertisseurs buck. D'autres architectures connues de convertisseurs, tel que des convertisseurs de type SEPIC (« single-ended primary-inductor converter ») ou flyback sont également envisageables sans pour autant sortir du contexte de l'invention. De tels convertisseurs sont en soi connus dans l'art et leur fonctionnement ne sera pas détaillé dans le cadre de la présente description. Le rapport cyclique des moyens d'interrupteurs d'un convertisseur boost, tels qu'un transistor à effet de champ, MOS, permet de définir le rapport entre la tension sortie et la tension d'entrée. Le rapport cyclique du MOS est commandé par un signal d'horloge non représenté. Pour des raisons de performance, il est intéressant d'utiliser les convertisseurs 110, 112 en parallèle, mais en utilisant des signaux d'horloges déphasés de 360° divisé par le nombre de convertisseurs. Le rapport cyclique résultant est alors égal au rapport cyclique d'un des convertisseurs multiplié par le nombre de phases, pour donner la tension de sortie commune du convertisseur boost multiphase 120, indiquée par V_{BOOST}. Alternativement, le convertisseur multiphase peut être mise en oeuvre de manière connue sans signaux d'horloge, par exemple par quasi résonnance. Les convertisseurs buck 130, 132 de chaque branche puisent dans ce réservoir commun pour piloter les groupes de sources lumineuses 10, 20.
Le dispositif comprend des moyens de contrôle 140, tels que par exemple un microcontrôleur programmable, qui est configuré à adapter le courant d'entrée de chaque convertisseur boost 110, 112. L'adaptation se fait en fonction d'une fraction prédéterminée de la valeur moyenne de la tension V_{BOOST} observée, ainsi qu'en fonction des besoins de courant spécifiques de chaque groupe 10, 20 monté en charge de la branche respective. Si les moyens de contrôle sont informés, par exemple par le biais d'un message reçu sur un bus CAN d'un véhicule automobile, qu'une fonction lumineuse, par exemple représentée par le groupe 10, est éteinte, les moyens de contrôles sont configurés à conclure que le courant d'entrée de la branche en question sera nul. Si par contre le groupe 10 est allumé par un utilisateur, les moyens de contrôle sont configurés à conclure qu'un courant spécifique est à appliquer pour le groupe 10 en question. Les moyens de contrôle 140 utilisent en entrée une valeur de tension 111, 113 représentative du courant moyen d'entrée de chacun des convertisseurs boost 110, 112. Comme indiqué pour le convertisseur 110, la tension peut être mesurée aux bornes d'une résistance de shunt Rs, qui donne le produit du courant dans le MOS avec la valeur de la résistance Rs. Le courant en question est égal au courant dans l'inductance du convertisseur, dont le courant moyen correspond au courant d'entrée du convertisseur. Si la tension mesurée, qui est une image du courant d'entrée, dépasse une fraction prédéfinie de la valeur moyenne de V_{BOOST}, le cycle de fonctionnement en cours du convertisseur en question est interrompu par des moyens d'interruption 141, 143 agissant sur le MOS du convertisseur. La fraction prédéterminée dépend du groupe alimenté 10, 20 et de son état (allumé/éteint). Ceci implémente un partage du courant d'entrée entre les phases 110, 112 du convertisseur multiphase 120, de façon à refléter la puissance requise par les groupes de sources lumineuses rattachés à chaque phase.

Lorsqu'un défaut est détecté dans un des groupes, toute la branche en question, y compris le convertisseur boost et buck, peut être éteinte par des moyens de commande non illustrés.

Des implémentations plus concrètes de l'invention seront décrites dans ce qui suit.

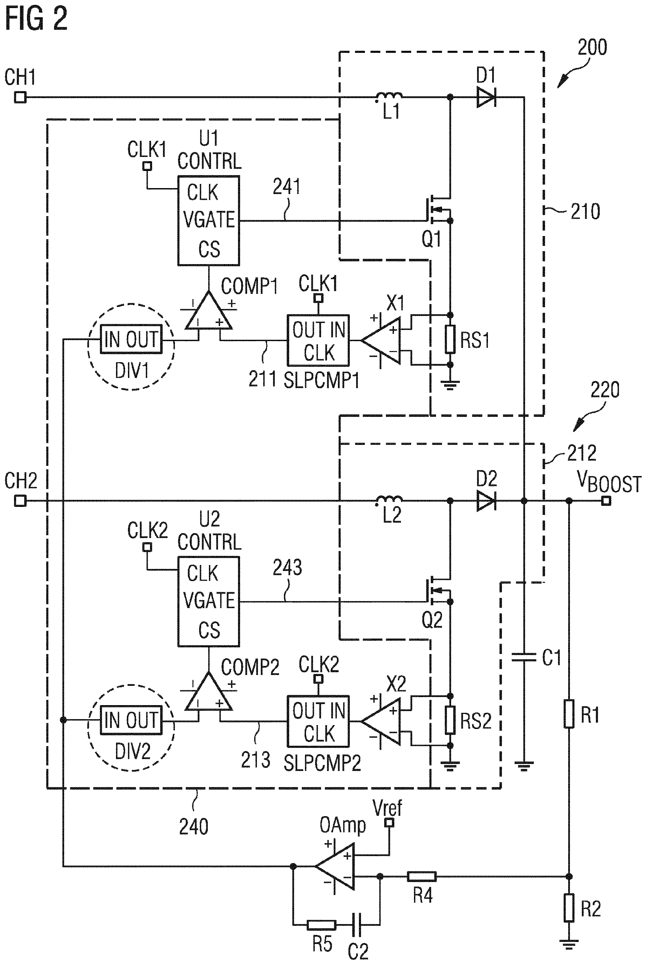

La Figure 2 donne une illustration schématique d'un détail d'un dispositif selon l'invention. Un convertisseur boost multiphase 220 à deux phases 210, 212 est montré sans limiter l'invention à cet exemple. La Figure 2 montre également des moyens de contrôle 240, dont uniquement les fonctionnalités qui sont utiles à la description de l'invention sont reprises. Pour faciliter la compréhension de l'invention, il est supposé que les convertisseurs boost 210, 212 opèrent en mode continu. Les courants dans les inductances des convertisseurs sont donc positifs à chaque instant. La fréquence de découpage est fixe, elle est imposée par le signal CLK. Les signaux d'horloge CLK1 et CLK2 sont déphasés de 180° dans cet exemple. Une capacité commune C1 est branchée à la sortie du convertisseur multiphase 220, qui correspond à la sortie commune des convertisseurs boost 210 et 212.

Un correcteur PI donne une moyenne de la tension V_{BOOST} multipliée dans le cas illustré par le rapport R2/(R2+R1) selon la tension de référence Vref. La sortie de l'amplificateur opérationnel Oamp donne donc la valeur mise à disposition des moyens de contrôle 240.

Pour l'exemple du convertisseur 210, cette valeur est divisée par des moyens diviseurs en soi connus dans l'art et marqués par un cercle en pointillé, avant d'être amené à la borne négative d'un comparateur COMP1.

D'autre part, l'image du courant dans l'inductance L1, compensé avec le compensateur de pente SLPCMP1 afin d'éviter les oscillations subharmoniques, est présentée à la borne positive du comparateur COMP1. Le courant dans l'inductance L1 est le courant du MOS mesuré aux bornes de la résistance de shunt RS1.

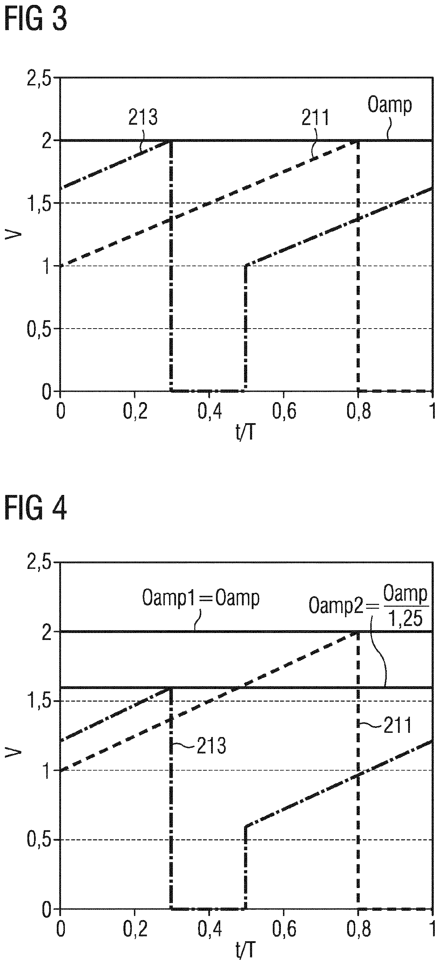

Afin d'illustrer l'utilité de ce montage, il est fait référence aux graphiques des Figures 3 et 4. La Figure 3 montre l'évolution des signaux 211 et 213 branchés aux bornes positives des comparateurs COMP1 et COMP2 respectivement, dans le cas où les moyens diviseurs encerclés sur la Figure 2 ne seraient pas présents (les diviseurs étant égaux à 1). Le signal de tension mis à disposition par la sortie de Oamp est également montré. Avec CLK1 et CLK2 déphasés de 180°, le rapport cyclique est de 0.8. Une période de découpage du convertisseur 210, 212 est illustrée. A 350khz, la durée illustrée correspond à 2.85µs. Quand le signal 211 respectivement 213 atteint le niveau du signal Oamp, le MOS du convertisseur est coupé par le signal 241, 243. Ceci est le cas à t=0.3T pour le signal 213 et t =0.8T pour le signal 211. Les moyennes respectives des courants d'entrée de chaque convertisseur 210, 212 sont donc égales et correspondent aux courants moyens dans L1 et L2.

La Figure 4 montre l'évolution des signaux 211 et 213 branchés aux bornes positives des comparateurs COMP1 et COMP2 respectivement, dans le cas où les moyens diviseurs encerclés sur la Figure 2 sont présents. A titre exemplaire, le diviseur DIV1 est égal à 1, tandis que le diviseur DIV2 est égal à 1.25. La valeur du signal de tension mis à disposition par la sortie de Oamp est donc divisé par 1.25 avant d'être comparée au signal 213 issu du convertisseur 212. Avec CLK1 et CLK2 déphasés de 180°, le rapport cyclique est de 0.8. Une période de découpage du convertisseur 210, 212 est illustrée. Quand les signaux 211 respectivement 213 atteignent le niveau du signal Oamp1 et Oamp2 respectivement, le MOS du convertisseur en question est coupé par les signaux 241, 243. Ceci est le cas à t=0.3T pour le signal 213 et t =0.8T pour le signal 211. Les moyennes respectives des courants d'entrée de chaque convertisseur 210, 212 ne sont plus égales et correspondent aux courants moyens différents dans les inductances L1 et L2. Le courant de crête dans L2 est inférieur au courant de crête dans L1. Les pentes des signaux restent inchangés par rapport au cas illustré par la Figure 3, puisque d'une part ni l'inductance ni la tension d'entrée n'est altérée, et d'autre part la compensation de pente ne change pas puisque le rapport cyclique n'est pas altéré.
Il est clair que le circuit décrit peut être modifié par l'homme du métier afin d'adapter les courants d'entrée des convertisseurs boost à des applications spécifiques. Les diviseurs du signal de sortie du convertisseur multiphase sont dans ce cas adaptés aux valeurs requises pour chaque convertisseur.
Pour des raisons pratiques, par exemple à cause de la limitation de gamme de sortie et d'entrée des comparateurs COMP1, COMP2, il peut également être utile de diviser l'image du courant branché sur les bornes positives des comparateurs, y compris la compensation de pente, par des diviseurs dédiés. Le principe fondamental du partage de courant reste inchangé.

## Revendications

1. Dispositif de pilotage de l'alimentation électrique (100) d'une pluralité de sources lumineuses, la pluralité de sources lumineuses étant divisée en au moins deux groupes (10, 20) de sources lumineuses, chaque groupe ayant des besoins de courant spécifiques,
le dispositif comprenant pour chaque groupe une branche comprenant un convertisseur de type élévateur de tension (110, 112) et un convertisseur de type abaisseur de tension (130, 132) branchés en série et configurés pour convertir une tension d'entrée en une tension de charge, chaque convertisseur de type abaisseur de tension (130, 132) étant configuré pour fournir la tension de charge au groupe (10, 20) de sources lumineuses monté en charge de la branche respective,
**caractérisé en ce que** les convertisseurs de type élévateur (110, 112) de chaque branche sont configurés pour opérer comme un convertisseur élévateur multiphase (120), lesdits convertisseurs de type élévateur (110, 112) étant reliés en sortie et configurés pour fournir une tension de sortie commune (V_{BOOST}), **en ce que** le dispositif comprend en outre des moyens de contrôle (140) configurés pour adapter le courant d'entrée du convertisseur élévateur (110, 112) de chaque branche en fonction des besoins de courant spécifiques du groupe (10, 20) monté en charge de la branche respective,
**en ce que** les moyens de contrôle (140) sont configurés pour adapter le courant d'entrée du convertisseur élévateur (110, 122) de chaque branche en fonction d'une valeur de tension (111, 113) représentative du courant moyen d'entrée du convertisseur élévateur (110, 112) de la branche et en fonction d'une fraction de la valeur moyenne de la tension de sortie commune (V_{BOOST}) du convertisseur multiphase (120),
et **en ce que** les moyens de contrôle (140) comprennent un comparateur pour chaque branche, le comparateur étant configuré pour comparer la valeur de tension (111, 113) représentative du courant moyen d'entrée du convertisseurs élévateur (110, 112) de la branche, à la fraction de la valeur moyenne de la tension de sortie commune (V_{BOOST}) du convertisseur élévateur multiphase (120), les fractions respectives définissant les besoins de courant spécifiques des groupes (10, 20) montés en charge des branches respectives,
et dans lequel les moyens de contrôle (140) comprennent des moyens d'interruption (141, 143) pour chacun des convertisseurs élévateurs (110, 112) configurés pour interrompre un cycle de fonctionnement en cours d'un convertisseur élévateur (110, 112), si la valeur de tension (111, 113) représentative du courant moyen d'entrée du convertisseur élévateur (110, 112) de la branche y relative dépasse la fraction de la valeur moyenne de la tension de sortie commune (V_{BOOST}) du convertisseur élévateur multiphase (120) à laquelle elle est comparée.

2. Dispositif selon la revendication 1, **caractérisé en ce que** les moyens de contrôle (140) comprennent des moyens d'horloge reliés aux moyens d'interruption (141, 143) pour chacun des convertisseurs élévateurs (110, 112), les moyens d'horloge étant configurés pour commander les moyens d'interruption (141, 143), les moyens d'horloge étant configurés pour émettre un signal d'horloge similaire pour chacun des convertisseurs élévateurs (110, 112), les signaux d'horloge ayant un déphasage de 360° divisé par le nombre de convertisseurs élévateurs (110, 112).

3. Dispositif selon une quelconque des revendications 1 ou 2, **caractérisé en ce que** les moyens de contrôle sont implémentés par un microcontrôleur unique ou par plusieurs microcontrôleurs reliés par des moyens de communication, et préférentiellement par un bus de données CAN d'un véhicule automobile.

4. Dispositif selon une des revendications 1 à 3, **caractérisé en ce que** les sources lumineuses sont des diodes électroluminescentes, LED.

5. Système d'éclairage pour un véhicule automobile, comprenant au moins un dispositif de pilotage de l'alimentation électrique de sources lumineuses, la pluralité de sources lumineuses étant divisée en au moins deux groupes de sources lumineuses, **caractérisé en ce que** ledit dispositif est conforme à une des revendications 1 à 4.

## Patentansprüche

1. Steuervorrichtung (100) für die elektrische Versorgung mehrerer Lichtquellen, wobei die mehreren Lichtquellen in wenigstens zwei Gruppen (10, 20) von Lichtquellen unterteilt sind, wobei jede Gruppe einen bestimmten Strombedarf hat, wobei die Vorrichtung für jede Gruppe einen Zweig enthält, der einen Umsetzer (110, 120) des Spannungsanhebungstyps und einen Umsetzer (130, 132) des Spannungsabsenkungstyps, die in Reihe geschaltet sind und konfiguriert sind, eine Eingangsspannung in eine Ladespannung umzusetzen, umfasst, wobei jeder Umsetzer (130, 132) des Spannungsabsenkungstyps konfiguriert ist, die Ladespannung an die Gruppe (10, 20) von Lichtquellen zu liefern, die so montiert sind, dass sie von dem jeweiligen Zweig geladen werden, **dadurch gekennzeichnet,**
**dass** die Umsetzer (110, 112) des Spannungsanhebungstyps jedes Zweigs konfiguriert sind, als mehrphasiger Spannungsanheber (120) zu arbeiten, wobei die Umsetzer (110, 112) des Anhebungstyps am Ausgang miteinander verbunden sind und konfiguriert sind, eine gemeinsame Ausgangsspannung (V_{BOOST}) zu liefern,
**dass** die Vorrichtung außerdem Steuermittel (140) umfasst, die konfiguriert sind, den Eingangsstrom des Anhebungsumsetzers (110, 112) jedes Zweigs als Funktion des spezifischen Strombedarfs der Gruppe (10, 20), die so montiert ist, dass sie von dem jeweiligen Zweig geladen wird, anzupassen,
**dass** die Steuermittel (140) konfiguriert sind, den Eingangsstrom des Anhebungsumsetzers (110, 122) jedes Zweigs als Funktion eines Spannungswerts (111, 113), der den mittleren Eingangsstrom des Anhebungsumsetzers (110, 112) des Zweigs repräsentiert, und als Funktion eines Bruchteils des mittleren Werts der gemeinsamen Ausgangsspannung (V_{BOOST}) des mehrphasigen Umsetzers (120) anzupassen,
und **dass** die Steuermittel (140) einen Komparator für jeden Zweig umfassen, wobei der Komparator konfiguriert ist, den Spannungswert (111, 113), der den mittleren Eingangsstrom des Anhebungsumsetzers (110, 112) des Zweigs repräsentiert, mit dem Bruchteil des mittleren Wertes der gemeinsamen Ausgangsspannung (V_{BOOST}) des Mehrphasenspannungsanhebers (120) zu vergleichen, wobei die jeweiligen Bruchteile den spezifischen Strombedarf der Gruppen (10, 20), die so montiert sind, dass sie über die jeweiligen Zweige geladen werden, definieren,
und wobei die Steuermittel (140) Unterbrechungsmittel (141, 143) für jeden Anhebungsumsetzer (110, 112) umfassen, die konfiguriert sind, einen aktuellen Arbeitszyklus eines Anhebungsumsetzers (110, 112) zu unterbrechen, falls der Spannungswert (111, 113), der den mittleren Eingangsstrom des Anhebungsumsetzers (110, 112) des damit in Beziehung stehenden Zweigs den Bruchteil des mittleren Werts der gemeinsamen Ausgangsspannung (V_{BOOST}) des Mehrphasenanhebungsumsetzers (120), mit dem er verglichen wird, überschreitet.

2. Vorrichtung nach Anspruch 1, **dadurch gekennzeichnet, dass** die Steuermittel (140) Taktgebermittel umfassen, die mit den Unterbrechungsmitteln (141, 143) für jeden der Anhebungsumsetzer (110, 112) verbunden sind, wobei die Taktgebermittel konfiguriert sind, die Unterbrechungsmittel (141, 143) zu steuern, wobei die Taktgebermittel konfiguriert sind, ein Taktgebersignal auszugeben, das für jeden der Anhebungsumsetzer (110, 112) ähnlich ist, wobei die Taktgebersignale eine Phasenverschiebung von 360°, dividiert durch die Anzahl der Anhebungsumsetzer (110, 112), besitzen.

3. Vorrichtung nach einem der Ansprüche 1 oder 2, **dadurch gekennzeichnet, dass** die Steuermittel durch einen einzigen Mikrocontroller oder durch mehrere Mikrocontroller, die durch Kommunikationsmittel und vorzugsweise durch einen CAN-Datenbus eines Kraftfahrzeugs verbunden sind, implementiert sind.

4. Vorrichtung nach einem der Ansprüche 1 bis 3, **dadurch gekennzeichnet, dass** die Lichtquellen Leuchtdioden (LED) sind.

5. Beleuchtungssystem für Kraftfahrzeug, das wenigstens eine Steuervorrichtung für die elektrische Versorgung von Lichtquellen umfasst, wobei die mehreren Lichtquellen in wenigstens zwei Gruppen von Lichtquellen unterteilt sind, **dadurch gekennzeichnet, dass** die Vorrichtung wie in einem der Ansprüche 1 bis 4 angegeben beschaffen ist.

## Claims

1. Device for controlling the electrical power supply (100) of a plurality of light sources, the plurality of light sources being divided into at least two groups (10, 20) of light sources, each group having specific current needs,
the device comprising, for each group, a branch comprising a voltage converter of the step-up type (110, 112) and a voltage converter of the step-down type (130, 132) connected in series and configured to convert an input voltage into a load voltage, each voltage converter of the step-down type (130, 132) being configured to supply the load voltage to the group (10, 20) of light sources that is connected as a load of the respective branch, **characterized in that** the converters of the step-up type (110, 112) of each branch are configured to operate as a multiphase step-up converter (120), said converters of the step-up type (110, 112) being connected to the output and configured to supply a common output voltage (V_{BOOST}),
**in that** the device furthermore comprises control means (140) configured to adapt the input current of the step-up converter (110, 112) of each branch according to the specific current needs of the group (10, 20) connected as a load of the respective branch,
**in that** the control means (140) are configured to adapt the input current of the step-up converter (110, 122) of each branch as a function of a voltage value (111, 113) representative of the average input current of the step-up converter (110, 112) of the branch and as a function of a fraction of the average value of the common output voltage (V_{BOOST}) of the multiphase converter (120),
and **in that** the control means (140) comprise a comparator for each branch, the comparator being configured to compare the voltage value (111, 113) representative of the average input current of the step-up converters (110, 112) of the branch with the fraction of the average value of the common output voltage (V_{BOOST}) of the multiphase step-up converter (120), the respective fractions defining the specific current needs of the groups (10, 20) connected as loads of the respective branches,
and in which the control means (140) comprise interruption means (141, 143) for each of the step-up converters (110, 112) configured to interrupt a current operating cycle of a step-up converter (110, 112) if the voltage value (111, 113) representative of the average input current of the step-up converter (110, 112) of the branch relating to it exceeds the fraction of the average value of the common output voltage (V_{BOOST}) of the multiphase step-up converter (120) with which it is compared.

2. Device according to Claim 1, **characterized in that** the control means (140) comprise clock means connected to the interruption means (141, 143) for each of the step-up converters (110, 112), the clock means being configured to control the interruption means (141, 143), the clock means being configured to emit a similar clock signal for each of the step-up converters (110, 112), the clock signals having a phase difference of 360° divided by the number of step-up converters (110, 112) .

3. Device according to either one of Claims 1 and 2, **characterized in that** the control means are implemented by a single microcontroller or by several microcontrollers connected via communication means, and preferably via a CAN databus of an automobile vehicle.

4. Device according to one of Claims 1 to 3, **characterized in that** the light sources are light-emitting diodes, or LEDs.

5. Lighting system for an automobile vehicle, comprising at least one device for controlling the electrical power supply of light sources, the plurality of light sources being divided into at least two groups of light sources, **characterized in that** said device is according to one of Claims 1 to 4.
